# EUROPÄISCHE PATENTSCHRIFT

(11) **EP 1 454 946 B1**
(45) Veröffentlichungstag und Bekanntmachung des Hinweises auf die Patenterteilung: **31.12.2008**
(21) Anmeldenummer: 04004142.8
(22) Anmeldetag: 24.02.2004
(51) Int. Cl.: C08J 9/12, B29C 44/56, B29C 44/00

(54) **Offenzelliger Schaumstoff aus hochschmelzenden Kunststoffen**
Open celled foam of high melting point polymer
Mousse à cellules ouvertes de polymère à haut point de fusion,

(30) Priorität: 24.02.2003 DE 10307736
(43) Veröffentlichungstag der Anmeldung: 08.09.2004
(73) Patentinhaber: BASF SE, 67056 Ludwigshafen (DE)
(72) Erfinder: Scherzer, Dietrich Dr., 67433 Neustadt (DE); Krautschneider, Hanns-Jörg, 67435 Neustadt (DE); Dietzen, Franz-Josef Dr., 67454 Hassloch (DE)
(74) Vertreter: Isenbruck, Günter

(56) Entgegenhaltungen:
- WO-A-02/00275
- DE-A- 10 008 461
- US-A- 6 077 600

## Beschreibung

Die vorliegende Erfindung betrifft einen offenzelligen Schaumstoff sowie ein Verfahren zu dessen Herstellung. Darüber hinaus betrifft die vorliegende Erfindung die Verwendung dieses Schaumstoffs zur Schallabsorption und zur Herstellung von Materialien zur Schallabsorption. Weiterer Gegenstand der vorliegenden Erfindung ist ein Verfahren zur Beeinflussung der Offenzelligkeit und der Dichte von Schaumstoffen.

Unter Schaumstoffen versteht man Werkstoffe mit über ihre ganze Masse verteilten offenen und/oder geschlossenen Zellen und einer Rohdichte, die niedriger ist als die der Gerüstsubstanz. Als Gerüstsubstanz können sowohl organische Polymere als auch anorganische Materialien fungieren. Schaumstoffe, die als Gerüstsubstanz organische Polymere aufweisen, nennt man Schaumkunststoffe, während Schaumstoffe, die anorganische Materialien umfassen, als Schaumbeton bzw. Schaumglas bezeichnet werden.

Die Schaumkunststoffe haben wegen ihrer ausgezeichneten Eigenschaften - geringe Dichte, gute Verarbeitbarkeit durch Sägen oder Schneiden, gute Wärme- und Schallisolierung - auf den verschiedensten Gebieten der Technik und Wirtschaft eine große Bedeutung erlangt. Die größte technische Bedeutung besitzen zurzeit die Polyurethan-Schaumkunststoffe, gefolgt von den Polystyrol-Schaumkunststoffen.

Schaumstoffe aus Polymeren werden auf verschiedenen Wegen hergestellt. Meistens geht man von fertigen Polymeren aus, die auf verschiedene Weise mit Treibmitteln versetzt und nachträglich verschäumt werden. Man kann dazu entweder das Treibmittel dem geschmolzenen Polymer unter Druck zumischen und es dann unter Abkühlen entspannen, oder man kann das feste Polymer bei tiefer Temperatur mit dem Treibmittel imprägnieren und die Masse dann danach durch Temperaturerhöhung aufschäumen. Es ist auch möglich, permanente Gase direkt in fluides Polymer - meist Latizes - einzuschlagen und den gewonnenen sahnigen Schaum zu stabilisieren. Polymere, die sich nicht schmelzen lassen, kann man durch Sinterprozesse oder durch Extraktion einer löslichen, fein verteilten zweiten Phase in Schaumstoffe überführen. Schaumstoffe können auch bei der Synthese der Polymere entstehen, wenn dabei gasförmige Bestandteile abgespalten werden.

Ein besonders zu erwähnendes Verfahren ist das Direktbegasungsverfahren. Beim Direktbegasungsverfahren wird in einem ersten Extruder oder einer ersten Extruderzone der Kunststoff aufgeschmolzen und die Schmelze unter hohem Druck mit einem Treibmittel vermischt und anschließend abgekühlt. Bei der Entspannung der abgekühlten Schmelze an der Extrusionsdüse schäumt das Material auf und erstarrt zu einem Schaumstoff. Die Erstarrung wird einerseits durch die Abkühlung beschleunigt, die durch die Verdampfung des Treibmittels bewirkt wird, andererseits dadurch, dass die weichmachende Wirkung des Treibmittels entsprechend seiner Verdampfung abnimmt. Dieses Verfahren ist seit langem bekannt und beispielsweise in den Patentanmeldungen DE-A 42 07 057, EP-A 0 296 408 und EP-A 0 373 402 beschrieben.

Die DE-A 42 07 057 beschreibt hochschmelzende aromatische Kunststoffe, die durch Ether-Sauerstoffatome und durch Carbonyl-, Sulfon- oder Imidgruppen verbundene Aromate enthalten. Diese Kunststoffe werden in einem Direktbegasungsverfahren unter Verwendung eines sauerstoffhaltigen aliphatischen Treibmittels extrusionsgeschäumt. Dabei wird der Kunststoff geschmolzen und die Schmelze oberhalb der Glasübergangstemperatur des reinen Kunststoffes unter Druck mit einem Treibmittel vermischt. Die Mischung wird unter Aufrechterhaltung des Druckes bis unter die Schmelztemperatur des reinen Kunststoffes auf eine Temperatur abgekühlt, bei der sie noch schmelzflüssig ist. Die abgekühlte Mischung wird anschließend durch Entspannung aufgeschäumt. Die aus diesem Verfahren resultierenden Schaumstoffe weisen eine geschlossenzellige Struktur auf.

Die EP-A 0 296 408 beschreibt ein Verfahren zur Herstellung eines stranggepressten und geschäumten Erzeugnisses, welches ein technisches thermoplastisches Harz allein oder in Kombination mit einem aromatischen Alkenylpolymer und einem Treibmittel umfasst, wobei das Treibmittel bei Raumtemperatur im Harz im Wesentlichen unlöslich ist, sich aber im Extruder in der Schmelze löst. Das geschäumte Erzeugnis wird ebenfalls durch das Direktbegasungsverfahren hergestellt. Der Schaumstoff gemäß EP-A 0 296 408 weist eine geschlossenzellige Struktur auf.

Die EP-A 0 373 402 betrifft dehnfähige Schaumstoffe aus thermoplastischen Polyetherimid-Harzzusammensetzungen, die mit gelösten sauerstoffhaltigen Kohlenwasserstofftreibmitteln versehen sind. Diese Schaumstoffe werden ebenfalls durch das Direktbegasungsverfahren hergestellt und weisen eine geschlossenzellige Struktur auf.

Bei vielen Anwendungen von Schaumstoffen ist es jedoch vorteilhaft, dass die Struktur der Schaumstoffe offenzellig ist. Dieses ist insbesondere von Vorteil, wenn die betreffenden Schaumstoffe zur Schallabsorption verwendet werden.

Schaumstoffe zur Schallabsorption werden beispielsweise in Motorräumen von Fahrzeugen verwendet. Zur Schallabsorption werden dabei hochtemperaturbeständige Schaumstoffe benötigt, da in Motorräumen üblicherweise hohe Temperaturen herrschen. Die in diesen Bereichen bisher verwendeten Schaumstoffe sind ausschließlich Duroplasten. Unter Duroplasten versteht man aus härtbaren Harzen hergestellte ausgehärtete Kunststoffe, die sich bei Temperaturänderungen nur minimal verändern. Duroplasten sind engmaschig bis zur Zersetzungstemperatur vernetzte hochpolymere Werkstoffe, die bei niederen Temperaturen stahlelastisch sind und auch bei hohen Temperaturen nicht viskos fließen, sondern sich zwischen 50 °C oder einer höheren Temperatur oder der Zersetzungstemperatur bei sehr begrenzter Deformierbarkeit elastisch verhalten.

Nachteilig bei der Verwendung von Duroplasten ist, dass sie nach ihrer Verwendung nicht recycelt werden.

Deshalb ist es wünschenswert, einen Schaumstoff aus einem thermoplastischen Kunststoff bereitzustellen, der hochtemperaturbeständig und offenzellig ist und der sich nach seiner Verwendung recyceln lässt.

Die Aufgabe der vorliegenden Erfindung ist somit die Bereitstellung von Schaumstoffen, die sehr gut zur Schallabsorption geeignet sind, bei hohen Temperaturen beständig sind und recyclebar sind.

Die Aufgabe wird gelöst durch einen Schaumstoff aus einem hochtemperaturbeständigen thermoplastischen Kunststoff, ausgewählt aus der Gruppe bestehend aus Polyetherimiden, Polyethersulfonen, Polysulfonen, Polyetherketonen, Polyetheretherketonen, Polyetherketonketonen, Polyethersulfonamiden und deren Gemischen.

Der erfindungsgemäße hochtemperaturbeständige thermoplastische Kunststoff ist dann dadurch gekennzeichnet, dass der Schaumstoff eine offenzellige Struktur aufweist, wobei der Schaum eine Offenzelligkeit von mindestens 75 %, bevorzugt mindestens 85 %, besonders bevorzugt mindestens 90 %, aufweist.

Als thermoplastische Kunststoffe werden erfindungsgemäß Kunststoffe bezeichnet, die bei Gebrauchstemperatur weiche oder harte Werkstoffe sind und die oberhalb der Gebrauchstemperaturen einen Fließübergangsbereich besitzen. Thermoplastische Kunststoffe zeichnen sich gegenüber Duroplasten dadurch aus, dass sie problemlos recyclebar sind.

Unter hochtemperaturbeständigen Kunststoffen versteht man im Sinne der vorliegenden Erfindung Kunststoffe, die für den Einsatz bei hohen Temperaturen, insbesondere bei Temperaturen von im Allgemeinen über 150 °C, bevorzugt über 180 °C, besonders bevorzugt über 200 °C, geeignet sind.

Die erfindungsgemäßen Schaumstoffe zeichnen sich durch eine hervorragende Schallabsorption auch bei hohen Temperaturen aus.

Die erfindungsgemäßen Schaumstoffe sind Zweiphasensysteme aus hochtemperaturbeständigen thermoplastischen Kunststoffen und Gasen, die in Form von zahlreichen Blasen zellenförmig in der Polymermatrix verteilt sind. In den erfindungsgemäßen Schaumstoffen sind die Gaszellen untereinander verbunden, so dass es sich um einen offenzelligen Schaumstoff handelt.

Der erfindungsgemäße Schaumstoff weist im Allgemeinen eine Zellgröße zwischen 50 und 2000 µm, bevorzugt zwischen 100 und 1000 µm, besonders bevorzugt zwischen 100 und 800 µm, auf. Darüber hinaus weist der erfindungsgemäße Schaumstoff im Allgemeinen eine Dichte zwischen 20 und 200 g/l, bevorzugt 20 und 150 g/l, besonders bevorzugt 30 und 100 g/l, auf. Die Dichte wird dabei nach DIN 53420 und die Zellgröße durch Ausmessen der Zellen unter einem Mikroskop bestimmt.

Der erfindungsgemäße Schaumstoff weist eine Offenzelligkeit von mindestens 75 %, bevorzugt mindestens 85 %, besonders bevorzugt mindestens 90 %, auf. Die Offenzelligkeit wird gemäß DIN ISO 4590 bestimmt.

Dieser erfindungsgemäße Schaumstoff ist aus einem Kunststoff aufgebaut, der ausgewählt ist aus der Gruppe bestehend aus Polyetherimiden, Polyethersulfonen, Polysulfonen, Polyetherketonen, Polyetheretherketonen, Polyetherketonketonen, Polyethersulfonamiden und deren Gemischen. In einer besonderen Ausführungsform wird der Kunststoff ausgewählt aus der Gruppe bestehend aus Polyetherimiden, Polyethersulfonen und Polysulfonen. In einer weiteren bevorzugten Ausführungsform weist der hochtemperaturbeständige thermoplastische Kunststoff aromatische Einheiten, insbesondere Phenylengruppen, auf. Diese aromatischen Einheiten sind im Allgemeinen durch Ketongruppen, Sulfongruppen oder Imidgruppen verbunden. In einer ganz besonders bevorzugten Ausführungsform handelt es sich um Polyetherimide, Polyethersulfone oder Polysulfone mit aromatischen Einheiten. Ein Beispiel für einen bevorzugten Kunststoff ist Polyethersulfon 3010 E (BASF).

Der Kunststoff, aus dem die erfindungsgemäßen Schaumstoffe gebildet werden, weist im Allgemeinen eine Glasübergangstemperatur oberhalb 170 °C, bevorzugt oberhalb 180 °C, besonders bevorzugt oberhalb 200 °C auf.

In einer bevorzugten Ausführungsform der vorliegenden Erfindung ist der Kunststoff, aus dem der erfindungsgemäße Schaumstoff aufgebaut ist, erst oberhalb 280 °C, bevorzugt erst oberhalb 300 °C, besonders bevorzugt erst oberhalb 320 °C, extrudierbar.

Kunststoffe, welche die vorstehenden Eigenschaften aufweisen, werden üblicherweise als hochwärmeformbeständige Konstruktionswerkstoffe (high performance plastics) bezeichnet.

Der erfindungsgemäße Schaumstoff kann gegebenenfalls zusätzlich noch Nukleierungsmittel enthalten. Nukleierungsmittel dienen im Allgemeinen zur Steuerung der Zellzahl des Schaums. Sie bewirken somit die Entstehung einer großen Zahl von Poren am Beginn des Schäumprozesses und tragen zu einer feinen und gleichmäßigen Porenstruktur bei. Eine Vielzahl von Zusatzstoffen kann dabei als Nukleierungsmittel dienen, beispielsweise kleine Mengen (z. B. 0,2 bis 2 Gew.-%, bezogen auf den Kunststoff) an feinteiligen, unter den Verfahrensbedingungen unschmelzbaren Feststoffen, wie Silicagel. Darüber hinaus können gegebenenfalls Zusätze, die der Verbesserung der Brandbeständigkeit (Flammschutzmittel) dienen, beispielsweise Zinkborat, oder andere Verarbeitungshilfsmittel in dem erfindungsgemäßen Schaumstoff enthalten sein.

Weiterer Gegenstand der vorliegenden Erfindung ist ein Verfahren zur Herstellung eines erfindungsgemäßen offenzelligen Schaumstoffs durch Aufschmelzen eines thermoplastischen Kunststoffs oder einer Mischung enthaltend einen thermoplastischen Kunststoff, wobei eine Schmelze erhalten wird, Vermischen der Schmelze mit mindestens einem Treibmittel unter Druck und Schäumen der Schmelze enthaltend das Treibmittel durch Auspressen an die freie Atmosphäre, dadurch gekennzeichnet, dass
das Schäumen bei einer Temperatur der Schmelze erfolgt, die 2 bis 20 °C, bevorzugt 2 bis 12 °C, besonders bevorzugt 2 bis 10 °C, höher liegt als die Temperatur, bei der ein geschlossenzelliger Schaumstoff gebildet wird (Variante A); oder

dadurch gekennzeichnet, dass
der schäumende Kunststoff einen pulverförmigen Feststoff enthält, der als Zellöffner wirkt, und das Schäumen bei einer Temperatur der Schmelze erfolgt, die 2 bis 12 °C, bevorzugt 2 bis 10 °C, besonders bevorzugt 2 bis 8 °C, höher liegt als die Temperatur, bei der ein geschlossenzelliger Schaumstoff gebildet wird (Variante B); oder

dadurch gekennzeichnet, dass
der schäumende Kunststoff ein Fremdpolymer enthält, das als Zellöffner wirkt und die Herstellung des offenzelligen Schaums bei Schäumtemperaturen ermöglicht, bei denen sonst ein geschlossenzelliger Schaum entstehen würde (Variante C).

Es ist ebenfalls möglich, offenzellige Schaumstoffe durch die Kombination der vorstehend genannten Verfahren herzustellen, z. B. kann das Schäumen bei einer Temperatur der Schmelze erfolgen, die 2 bis 20 °C, bevorzugt 2 bis 12 °C, besonders bevorzugt 2 bis 10 °C, höher liegt als die Temperatur, bei der ein geschlossenzelliger Schaumstoff gebildet wird, wobei der Schmelze mindestens ein pulverförmiger Feststoff und/oder mindestens ein Fremdpolymer zugegeben wird. Es ist ebenfalls möglich, das Verfahren bei Temperaturen durchzuführen, bei denen normalerweise ein geschlossenzelliger Schaumstoff gebildet wird, und der Schmelze mindestens einen pulverförmigen Feststoff und/oder mindestens ein Fremdpolymer zuzugeben. Bevorzugt werden die erfindungsgemäßen Schaumstoffe durch Zugabe mindestens eines pulverförmigen Feststoffes und/oder mindestens eines Fremdpolymers hergestellt. Daher ist im Allgemeinen eine Kombination der Variante B und C besonders bevorzugt.

Erfindungsgemäß ist somit die Verwendung eines hochtemperaturbeständigen thermoplastischen Kunststoffes in einem Direktbegasungsverfahren des Standes der Technik vorgesehen, wobei durch Erhöhung der Temperatur und/oder durch Zugabe eines pulverförmigen Feststoffes und/oder durch Zugabe eines Fremdpolymers eine offenzellige Struktur des resultierenden Schaumstoffs bewirkt wird.

Das erfindungsgemäße Verfahren gemäß Variante A - C wird dabei im Allgemeinen in einem Extruder durchgeführt.

Mittels der genannten Verfahren bzw. Kombinationen der genannten Verfahren können die erfindungsgemäßen offenzelligen Schaumstoffe erhalten werden.

### Variante A:

Um eine offenzellige Struktur des durch das erfindungsgemäße Verfahren erhältlichen Schaumstoffs zu bewirken, ist die Temperatur der Schmelze beim Schäumen um 2 bis 20 °C, bevorzugt 2 bis 12 °C, besonders bevorzugt 2 bis 10 °C, höher als die Temperatur, bei der ein geschlossenzelliger Schaumstoff gebildet wird.

Erfindungsgemäß wurde gefunden, dass die Offenzelligkeit in einem engen Temperaturfenster mit der Temperatur zunimmt. Steigt die Temperatur allerdings über einen bestimmten Wert, so fällt der Schaum wieder zusammen. Einen offenzelligen Schaum erhält man erfindungemäß also nur, wenn die Temperatur in diesem sehr engen Temperaturbereich von 2 bis 20 °C, bevorzugt 2 bis 12 °C, besonders bevorzugt 2 bis 10 °C, höher liegt als die Temperatur, bei der ein geschlossenzelliger Schaumstoff gebildet wird.

Wird in dem erfindungsgemäßen Verfahren als Kunststoff Polyethersulfon 3010 E der BASF verwendet, so beträgt die Temperatur beim Schäumen 252 bis 270 °C, bevorzugt 252 bis 262 °C, besonders bevorzugt 252 bis 260 °C.

### Variante B:

Alternativ kann zum Erzeugen der offenzelligen Struktur ein pulverförmiger Feststoff zusammen mit einem thermoplastischen Kunststoff oder einer Mischung enthaltend den thermoplastischen Kunststoff in einen Einzug eines Extruders gegeben werden. Die Temperatur der Schmelze liegt dann 2 bis 12 °C, bevorzugt 2 bis 10 °C, besonders bevorzugt 2 bis 8 °C, höher als die Temperatur, bei der ein geschlossenzelliger Schaumstoff gebildet wird. Durch die Zugabe eines pulverförmigen Feststoffs wird somit im Allgemeinen die benötigte Temperatur, bei der ein offenzelliger Schaumstoff ohne Zugabe eines pulverförmigen Feststoffs (Variante A) gebildet wird, erniedrigt.

Der pulverförmige Feststoff ist bevorzugt ausgewählt aus der Gruppe bestehend aus Graphit, Graphit mit Talkum und Graphit mit anderen Füllstoffen. Besonders bevorzugt ist Graphit. Der pulverförmige Feststoff wird dabei im Allgemeinen in einer Menge von 0,1 bis 5,0 Gew.-%, bevorzugt 0,2 bis 4 Gew.-%, besonders bevorzugt 0,5 bis 4,0 Gew.-%, jeweils bezogen auf die Polymermasse, verwendet. Unter der Polymermasse wird die Masse an thermoplastischem Kunststoff bzw. der Mischung, die den thermoplastischen Kunststoff enthält, und die Masse an pulverförmigem Feststoff verstanden.

Bei der Verwendung von Graphit mit Talkum als pulverförmigen Feststoff beträgt die Menge an Feststoff in einer besonders bevorzugten Ausführungsform 0,1 bis 2 Gew.-%, bevorzugt 0,5 bis 2,0 Gew.-%, jeweils bezogen auf die Polymermasse.

### Variante C:

Alternativ kann mindestens ein Fremdpolymer zusammen mit einem thermoplastischen Kunststoff oder einer Mischung enthaltend einen thermoplastischen Kunststoff in einen Einzug eines Extruders gegeben werden, um eine offenzellige Struktur des Schaumstoffs zu bewirken. Das Fremdpolymer und der zu schäumende Kunststoff werden gemeinsam aufgeschmolzen. Das Fremdpolymer wird dabei im Kunststoff fein verteilt. In diese Mischung wird das Treibmittel eingespritzt, die Polymerschmelze wird gekühlt und schäumt nach Verlassen der Düse auf. Die Menge an Fremdpolymer beträgt vorzugsweise 0,1 bis 20 Gew.-%, bevorzugt 0,2 bis 10 Gew.-%, besonders bevorzugt 0,2 bis 5,0 Gew.-%, jeweils bezogen auf die Polymermasse. Unter der Polymermasse wird die Masse an thermoplastischem Kunststoff bzw. der Mischung, die den thermoplastischen Kunststoff enthält, und die Masse an Fremdpolymer verstanden.

Bei dem Fremdpolymer kann es sich um einen beliebigen thermoplastischen Kunststoff handeln, der mit dem eigentlichen Matrixmaterial nicht mischbar ist. Beispiele für geeignete Fremdpolymere sind Polyethylen mit niedriger Dichte und linearer Struktur (LLDPE) oder Polypropylen (PP).

Zur Herstellung der erfindungsgemäßen offenzelligen Schaumstoffe können zwei oder drei der zuvor geschilderten Maßnahmen beliebig kombiniert werden (Variante A - C). Durch Variation der Schäumungsbedingungen und durch Variation der Treibmittelrezeptur lassen sich darüber hinaus auch die Offenzelligkeit und die Dichte der im erfindungsgemäßen Verfahren erhaltenen Schaumstoffe variieren.

Da die bei erhöhter Schäumtemperatur hergestellten Schäume relativ weich sind und eine längere Kühlzeit benötigen, ist es bevorzugt, wenn die offenzellige Schäume bei niedrigeren Temperaturen hergestellt werden, bevorzugt bei im Wesentlichen den gleichen Temperaturen, bei denen üblicherweise ein geschlossenzelliger Schaumstoff hergestellt wird. Dieses wird durch die Variante B und/oder C ermöglicht.

Im erfindungsgemäßen Verfahren erfolgt die Schaumstoffbildung durch Aufschmelzen eines thermoplastischen Kunststoffs oder einer Mischung enthaltend einen thermoplastischen Kunststoff, wobei eine Schmelze erhalten wird, Vermischen der Schmelze mit mindestens einem Treibmittel unter Druck und Schäumen der Schmelze enthaltend das Treibmittel durch Auspressen an die freie Atmosphäre (Direktbegasungsverfahren). Bei der Entspannung verdampft das Treibmittel und bewirkt durch den Entzug der Verdampfungswärme eine rasche Abkühlung der Schmelze. Gleichzeitig steigt ihre Erstarrungstemperatur an, weil die weichmachende Wirkung des Treibmittels entsprechend ihrer Verdampfung verloren geht. Beide Effekte addieren sich zu einer raschen Erstarrung des Schaumstoffes nach Beginn der Expansion.

In dem erfindungsgemäßen Verfahren werden vorzugsweise Treibmittel verwendet, die ausgewählt sind aus der Gruppe bestehend aus inerten Gasen, beispielsweise CO₂, Stickstoff, Argon; Kohlenwasserstoffen, beispielsweise Propan, Butan, Pentan, Hexan; aliphatischen Alkoholen, beispielsweise Methanol, Ethanol, Propanol, Isopropanol, Butanol; aliphatischen Ketonen, beispielsweise Aceton, Methylethylketon; aliphatischen Estern, beispielsweise Methyl- und Ethylacetat; chemischen Treibmitteln; fluorierte Kohlenwasserstoffe, beispielsweise 1,1,1,2-Tetrafluorethan (HFKW 134a) und Difluorethan (HFKW 152 a); und Gemische der zuvor genannten Treibmittel.

Diese Treibmittel werden gegebenenfalls in Kombination mit Wasser verwendet.

Ein Vorteil bei der Verwendung von Mischungen aus Wasser und Treibmittel ist, dass leicht brennbare Flüssigkeiten bei den hohen Temperaturen der Schäumung nur in geringen Mengen eingesetzt werden und somit das Sicherheitsrisiko herabgesetzt wird.

Je nach der gewünschten Dichte des Schaumstoffs wird das Treibmittel in einer unterschiedlichen Menge eingesetzt. In einer bevorzugten Ausführungsform der vorliegenden Erfindung wird das Treibmittel in einer Menge von 0,5 bis 15 Gew.-%, bevorzugt 1 bis 12 Gew.-%, besonders bevorzugt 3 bis 10 Gew.-%, jeweils bezogen auf die gesamte Polymermasse, verwendet. Unter der gesamten Polymermasse wird die Masse des thermoplastischen Kunststoffs bzw. der Mischung, die den thermoplastischen Kunststoff enthält, und gegebenenfalls der Masse des Fremdpolymers und gegebenenfalls der Masse des pulverförmigen Feststoffs verstanden.

Das erfindungsgemäße Verfahren kann gegebenenfalls unter Zusatz von Nukleierungsmitteln und anderen Zusätzen durchgeführt werden. Diesbezüglich wird auf die entsprechenden Ausführungen in der Beschreibung des erfindungsgemäßen Schaumstoffs verwiesen.

Im Folgenden wird eine bevorzugte Ausführungsform des erfindungsgemäßen Verfahrens geschildert:

In einer bevorzugten Ausführungsform der vorliegenden Erfindung wird der zu verschäumende Kunststoff als Granulat, gegebenenfalls mit einem pulverförmigen Nukleierungsmittel, gegebenenfalls mit mindestens einem pulverförmigen Feststoff (Variante B) und/oder gegebenenfalls mindestens einem Fremdpolymer (Variante C) einem Extruder zugeführt, z. B. einen Ein- oder Zweischneckenextruder.

Das erfindungsgemäße Verfahren kann auf einer Anlage durchgeführt werden, die aus zwei Extrudern besteht. Im ersten Extruder wird zunächst der Kunststoff gegebenenfalls mit einem Nukleierungsmittel, gegebenenfalls mindestens einem Feststoff und/oder gegebenenfalls mindestens einem Fremdpolymer bei einer Temperatur oberhalb seiner Glastemperatur aufgeschmolzen, wobei eine Schmelze des Kunststoffs erhalten wird, dann wird unter Druck das Treibmittel in die Schmelze eingepresst und mit dieser homogen vermischt, wobei die Glastemperatur der Mischung absinkt. In einem zweiten Extruder wird die Mischung auf eine Temperatur abgekühlt, bei der die Viskosität der Schmelze noch ausreichend hoch ist, um einen offenzelligen Schaumstoff zu bilden. Das Verfahren kann auch auf einer Anlage durchgeführt werden, die aus einem Extruder besteht. Die oben beschriebenen Verfahrensschritte werden dann alle auf einem Extruder durchgeführt.

Der erfindungsgemäße offenzellige Schaumstoff eignet sich hervorragend zur Schallabsorption. Weiterer Gegenstand der vorliegenden Erfindung ist somit die Verwendung des erfindungsgemäßen Schaumstoffs zur Schallabsorption bzw. zur Herstellung von Materialien zur Schallabsorption.

Mit dem erfindungsgemäßen Verfahren werden im Allgemeinen Formkörper, bevorzugt Platten, aus dem erfindungsgemäßen offenzelligen Kunststoff hergestellt. Zu diesem Zweck wird im Allgemeinen die Schmelze des Kunststoffs durch Auspressen an die freie Atmosphäre aus einer Schlitzdüse aufgeschäumt und in einer Kalibriervorrichtung zu Platten geformt.

Die Formkörper aus dem erfindungsgemäßen Kunststoff eignen sich hervorragend zur Schallabsorption.

In den durch das erfindungsgemäße Verfahren bevorzugt hergestellten Platten aus dem erfindungsgemäßen Schaumstoff sind die äußeren Schichten im Allgemeinen kompakter als die Bereiche im Inneren. Aufgrund dieser höheren Offenzelligkeit absorbieren die Schichten im Schauminneren den Schall deutlich besser als die äußeren Plattenschichten. Daher werden in einer besonderen Ausführungsform der vorliegenden Erfindung durch das oben beschriebene erfindungsgemäße Verfahren Platten aus dem erfindungsgemäßen offenzelligen Schaumstoff hergestellt, die Platten in der Mitte durchgesägt und die gesägten Oberflächen (ehemals innen) zur Schallabsorption verwendet. Es ist natürlich auch möglich, die so erhaltenen zwei Hälften einer Platte derart zusammenzufügen, dass die Schaumhaut (ehemals äußere Schichten) in der Mitte liegt und so wieder eine Platte mit zwei wirksamen schallabsorbierenden Oberflächen entsteht. Weiterhin ist es natürlich auch möglich, die zwei äußeren Schichten der Platte zu entfernen und so direkt eine Platte mit zwei wirksameren schallabsorbierenden Oberflächen zu erhalten.

Weiterer Gegenstand der vorliegenden Anmeldung ist somit ein Verfahren zur Herstellung von Schaumstoffplatten für den Einsatz zur Schallabsorption, dadurch gekennzeichnet, dass Platten aus einem Schaumstoff durch ein oben beschriebenes erfindungsgemäßes Verfahren, insbesondere durch Schäumen der Schmelze durch Auspressen an die freie Atmosphäre aus einer Schlitzdüse und Formgebung in einer Kalibriervorrichtung, hergestellt werden, wobei Platten mit breiten und schmalen äußeren Oberflächen resultieren, und Teilen der resultierenden Platten parallel zu ihren breiten Oberflächen, wobei zwei Teile der Platten entstehen mit jeweils einer neuen inneren breiten Oberfläche, und gegebenenfalls
Zusammenkleben der durch das Teilen erhaltenen zwei Teile der Platten, wobei die ehemals äußeren breiten Oberflächen miteinander verklebt werden, so dass die neuen inneren breiten Oberflächen sich außen befinden.

Das Teilen der durch das erfindungsgemäße Verfahren hergestellten Schaumstoffplatten erfolgt auf dem Fachmann bekannte Weise, beispielsweise durch Sägen oder Schneiden.

Durch das oben beschriebene Verfahren werden im Allgemeinen Schaumstoffplatten hergestellt, bei denen die Dicke der breiten Oberfläche im Allgemeinen 1,5-fach, bevorzugt mindestens 2-fach, besonders bevorzugt mindestens 2,5-fach, größer ist als die Dicke der schmalen Oberfläche.

Die Schaumstoffplatten werden im erfindungsgemäßen Verfahren parallel zu ihren breiten Oberflächen bevorzugt mittig durchgesägt.

Der im erfindungsgemäßen Verfahren verwendete Klebstoff zum Zusammenkleben der Teile der Platten ist ein im Bereich von Schaumstoffen üblich verwendeter Klebstoff.

Darüber hinaus betrifft die vorliegende Erfindung ein Verfahren zur Beeinflussung der Offenzelligkeit und der Dichte von Schaumstoffen. Dabei werden durch Variation der Treibmittelrezeptur die Offenzelligkeit und die Dichte der resultierenden Schaumstoffe beeinflusst. Bei diesem erfindungsgemäßen Verfahren liegt die Schmelztemperatur beim Schäumen um 2 bis 20 °C, bevorzugt 2 bis 12 °C, besonders bevorzugt 2 bis 10 °C, höher als diejenigen Temperaturen, bei der ein geschlossenzelliger Schaumstoff gebildet wird.

Die vorliegende Erfindung zeigt eine Reihe von Vorteilen gegenüber dem Stand der Technik:

Durch das erfindungsgemäße Verfahren sind erstmalig offenzellige Schaumstoffe zugänglich, die aus thermoplastischen hochtemperaturbeständigen Kunststoffen aufgebaut sind. Diese offenzelligen Schaumstoffe weisen den Vorteil auf, dass sie sich hervorragend zur Verwendung als Schallabsorptionsmaterial eignen. Damit können diese Schaumstoffe aus thermoplastischen hochtemperaturstabilen Kunststoffen die bisher als Schallabsorptionsmaterial verwendeten Duroplasten ersetzen. Duroplasten haben den Nachteil, dass sie nach ihrer Verwendung nicht recycelt werden können. Demgegenüber können die erfindungsgemäß verwendeten Schaumstoffe aus thermoplastischen hochtemperaturstabilen Kunststoffen nach ihrer Verwendung einer Wiederverwertung zugeführt werden.

Weitere Ausgestaltungen, Abwandlungen und Variationen sowie Vorteile der vorliegenden Erfindung sind für den Fachmann beim Lesen der Beschreibung ohne weiteres erkennbar und realisierbar, ohne dass er dabei den Rahmen der vorliegenden Erfindung verlässt.

Die vorliegende Erfindung wird anhand der vorliegenden Ausführungsbeispiele veranschaulicht, welche die Erfindung jedoch keinesfalls beschränken.

### Ausführungsbeispiele

Die Schaumstoffproben wurden auf einer Tandemanlage extrudiert. Diese besteht aus einem Aufschmelzextruder und einem Kühlextruder.

Der hochschmelzende Kunststoff und die Zusatzstoffe werden dem ersten Extruder zugeführt. Der Kunststoff wird aufgeschmolzen und das Treibmittel oder die Mischung der Treibmittel wird eingespritzt und dann in die Schmelze eingemischt. Die treibmittelhaltige Schmelze wird dann im zweiten Extruder auf die zum Schäumen notwendige Temperatur abgekühlt. Die Temperatur wird dabei so gewählt, dass ein offenzelliger Schaum entsteht. Nach dem Austritt aus einer Schlitzdüse schäumt die Schmelze auf und wird in einer Kalibriervorrichtung zu Platten geformt.

Bei dem hochschmelzenden Kunststoff handelt es sich um Polyethersulfon 3010E der BASF.

Die Offenzelligkeit wurde nach DIN ISO 4590 gemessen. Die Dichte wurde nach DIN 53420 bestimmt.

### Beispiel 1:

| **Vers Nr.** | **H₂O (%)** | **Aceton (%)** | **Talkum (%)** | **T-Sch (°C)** | **Dicke (mm)** | **Dichte (g/l)** | **Offenzelligkeit (%)** |
|---|---|---|---|---|---|---|---|
| 1* | 1,2 | 4 | 0,1 | 249,1 | 30 | 43 | 6 |
| 2 | 1,2 | 4 | 0,1 | 258,3 | 25 | 53 | 78 |
| 3 | 1,8 | 4 | 0,1 | 259,2 | 28 | 46 | 93 |

| | | | | | | | |
|---|---|---|---|---|---|---|---|
| * Versuch 1 ist nicht erfindungsgemäß, da hierbei eine Schmelztemperatur beim Schäumen gewählt wurde, bei der ein geschlossenzelliger Schaumstoff entsteht (Temperaturdifferenz zwischen Versuch 1 einerseits und Versuch 2 und 3 andererseits ungefähr 10°C). | | | | | | | |

Die Offenzelligkeit nimmt in einem engen Temperaturfenster mit der Temperatur zu. Steigt die Temperatur aber über einen bestimmten Wert, so fällt der Schaum wieder zusammen.

### Beispiel 2

Beim Graphit handelt es sich um UF 2 96/97 der Firma Kropfmühl AG.

| **Vers Nr.** | **H₂O** | **Aceton (%)** | **Talkum (%)** | **Graphit (%)** | **T-Sch (°C)** | **Dicke (mm)** | **Dichte (g/l)** | **Offenzellig- keit (%)** |
|---|---|---|---|---|---|---|---|---|
| 4 | 1,2 | 4 | 0,1 | | 258,3 | 25 | 53 | 78 |
| 5 | 1,2 | 4 | 0,5 | | 258,3 | 22 | 60 | 72 |
| 6 | 1,2 | 4 | 0,5 | | 256,1 | 27 | 47 | 84 |
| 7 | 1,2 | 4 | 1,0 | | 255,3 | 26 | 48 | 86 |
| 8 | 1,2 | 4 | | 1,0 | 254,5 | 23 | 56 | 87 |
| 9 | 1,2 | 4 | | 1,0 | 253,8 | 29 | 45 | 94 |

Die Offenzelligkeit wurde nach DIN ISO 4590 gemessen. Die Dichte wurde nach DIN 53420 bestimmt.

### Beispiel 3

Beim PA handelte es sich Ultramid B3K (Polyamid 6) der BASF, beim LLDPE um Lupolen 18 KFA der Firma Basell und beim PP um Novolen 3200 MC der Firma Basell

| **Vers Nr.** | **H₂O (%)** | **Aceton (%)** | **PA (%)** | **LLDPE (%)** | **PP (%)** | **T-Sch (°C)** | **Dicke (mm)** | **Dichte (g/l)** | **Offenzellig- keit (%)** |
|---|---|---|---|---|---|---|---|---|---|
| 10 | 1,2 | 4 | | | | 256,1 | 27 | 47 | 84 |
| 11 | 1,2 | 4 | 5 | | | 254,7 | 28 | 45 | 89 |
| 12 | 1,2 | 4 | | 5 | | 253,9 | 28 | 44 | 91 |
| 13 | 1,2 | 4 | | | 5 | 253,3 | 28 | 45 | 93 |

alle Versuche mit 0,5 % Talkum

Die Offenzelligkeit wurde nach DIN ISO 4590 gemessen. Die Dichte wurde nach DIN 53420 bestimmt.

### Beispiel 4

Die in Beispiel 3 hergestellten Platten wurden in der Mitte durchgesägt und die Schallabsorption nach DIN 52215 an den sägerauhen Platten gemessen

Die nachfolgende Tabelle zeigt die gemessenen Schallabsorptionswerte:

| Frequenz (Hz) | Schallabsorptionsgrad (%) |
|---|---|
| 800 | 22,7 |
| 1000 | 30,8 |
| 1250 | 38,1 |
| 1600 | 51,0 |
| 2000 | 59,8 |
| 2500 | 70,4 |
| 3150 | 74,5 |
| 4000 | 80,7 |

Folgende Tabelle verdeutlicht demgegenüber die Schallabsorption der nicht erfindungsgemäßen Platte aus Beispiel 1, Versuch 1:

| Frequenz (Hz) | Schallabsorptionsgrad (%) |
|---|---|
| 800 | 3,4 |
| 1000 | 3,8 |
| 1250 | 4,2 |
| 1600 | 4,7 |
| 2000 | 4,7 |
| 2500 | 5,2 |
| 3150 | 5,5 |
| 4000 | 7,1 |

## Patentansprüche

1. Schaumstoff aus einem hochtemperaturbeständigen thermoplastischen Kunststoff, ausgewählt aus der Gruppe bestehend aus Polyetherimiden, Polyethersulfonen, Polysulfonen, Polyetherketonen, Polyetheretherketonen, Polyetherketonketonen, Polyethersulfonamiden und deren Gemischen, **dadurch gekennzeichnet, dass** der Schaumstoff eine offenzellige Struktur aufweist, wobei der Schaumstoff eine Offenzelligkeit von mindestens 75 %, bevorzugt mindestens 85 % besonders bevorzugt mindestens 90 %, aufweist.

2. Schaumstoff nach Anspruch 1, **dadurch gekennzeichnet, dass** der Schaumstoff eine Zellgröße zwischen 50 und 2000 µm, bevorzugt zwischen 100 und 1000 µm, besonders bevorzugt zwischen 100 und 800 µm, aufweist und/oder der Schaumstoff eine Dichte zwischen 20 und 200 g/l, bevorzugt zwischen 20 und 150 g/l, besonders bevorzugt zwischen 30 und 100 g/l, aufweist.

3. Schaumstoff nach Anspruch 1 oder 2, **dadurch gekennzeichnet, dass** der Kunststoff eine Glasübergangstemperatur oberhalb 170°C, bevorzugt oberhalb 180 °C, besonders bevorzugt oberhalb 200 °C, aufweist und/oder bei Temperaturen oberhalb 280 °C. bevorzugt oberhalb 300 °C, besonders bevorzugt oberhalb 320 °C, thermoplastisch extrudierbar ist.

4. Verfahren zur Herstellung eines offenzelligen Schaumstoffs nach einem der Ansprüche 1 bis 3 durch Aufschmelzen eines thermoplastischen Kunststoffs oder einer Mischung enthaltend einen thermoplastischen Kunststoff, wobei eine Schmelze erhalten wird, Vermischen der Schmelze mit mindestens einem Treibmittel unter Druck und Schäumen der Schmelze enthaltend das Treibmittel durch Auspressen an die freie Atmosphäre, **dadurch gekennzeichnet, dass**
das Schäumen bei einer Temperatur der Schmelze erfolgt die 2 bis 20 °C, bevorzugt 2 bis 12 °C, besonders bevorzugt 2 bis 10 °C, höher liegt als die Temperatur, bei der ein geschlossenzelliger Schaumstoff gebildet wird; oder
**dadurch gekennzeichnet, dass** der schäumende Kunststoff einen pulverförmigen Feststoff enthält, der als Zellöffner wirkt, und das Schäumen bei einer Temperatur der Schmelze erfolgt, die 2 bis 12 °C, bevorzugt 2 bis 10 °C, besonders bevorzugt 2 bis 8 °C, höher liegt als die Temperatur, bei der ein geschlossenzelliger Schaumstoff gebildet wird;
oder **dadurch gekennzeichnet, dass** der schäumende Kunststoff ein Fremdpolymer enthält, das als Zellöffner wirkt, und die Herstellung des offenzelligen Schaums bei Schäumtemperaturen ermöglicht, bei denen sonst ein geschlossenzelliger Schaum entstehen würde.

5. Verfahren nach Anspruch 4, **dadurch gekennzeichnet, dass** ein pulverförmiger Feststoff verwendet wird, der ausgewählt ist aus der Gruppe bestehend aus Graphit, Graphit mit Talkum und Graphit mit anderen Füllstoffen, und/oder der pulverförmige Feststoff in einer Menge von 0,1 bis 5,0 Gew.-%, bevorzugt 0,2 bis 4,0 Gew.-%, besonders bevorzugt 0,5 bis 4,0 Gew.-%, jeweils bezogen auf die Polymermasse,verwendet wird.

6. Verfahren nach Anspruch 4, **dadurch gekennzeichnet, dass** in ein Fremdpolymer in einer Menge von 0,1 bis 20 Gew.-%, bevorzugt 0,2 bis 10 Gew.-%, besonders bevorzugt 0,2 bis 5,0 Gew.-%, jeweils bezogen auf die gesamte Polymermasse, verwendet wird.

7. Verfahren nach einem der Ansprüche 4 bis 6, **dadurch gekennzeichnet, dass** ein Treibmittel verwendet wird, das ausgewählt ist aus der Gruppe bestehend aus inerten Gasen, Kohlenwasserstoffen, aliphatischen Alkoholen, aliphatischen Ketonen, aliphatischen Estern, fluorierten Kohlenwasserstoffen, chemischen Treibmitteln und deren Gemischen, wobei diese Treibmittel gegebenenfalls in Kombination mit Wasser verwendet werden.

8. Verfahren nach einem der Ansprüche 4 bis 7, **dadurch gekennzeichnet, dass** das Treibmittel in einer Menge von 0,5 bis 15 Gew.-%, bevorzugt 1 bis 12 Gew.-%, besonders bevorzugt 3 bis 10 Gew.-%, jeweils bezogen auf die gesamte Polymermasse, verwendet wird.

9. Verwendung eines Schaumstoffs nach einem der Ansprüche 1 bis 3 zur Schallabsorption, und/oder zur Herstellung von Materialien zur Schallabsorption.

10. Formkörper, insbesondere Platten, enthaltend einen offenzelligen Schaumstoff nach einem der Ansprüche 1 bis 3.

11. Verfahren zur Herstellung von Schaumstoffplatten für den Einsatz zur Schallabsorption, **dadurch gekennzeichnet, dass** Platten aus einem Schaumstoff durch ein Verfahren gemäß den Ansprüchen 4 bis 8, insbesondere durch Schäumen der Schmelze durch Auspressen an die freie Atmosphäre aus einer Schlitzdüse und Formgebung in einer Kalibriervorrichtung, hergestellt werden, wobei Platten mit breiten und schmalen äußeren Oberflächen resultieren, und
Teilen der resultierenden Platten parallel zu ihren breiten Oberflächen, wobei zwei Teile der Platten entstehen mit jeweils einer neuen inneren breiten Oberfläche, und gegebenenfalls
Zusammenkleben der durch das Teilen erhaltenen zwei Teile der Platten, wobei die ehemals äußeren breiten Oberflächen miteinander verklebt werden, so dass die neuen inneren breiten Oberflächen sich außen befinden.

## Claims

1. A foam composed of a high-temperature-resistant thermoplastic selected from the group consisting of polyetherimides, polyether sulfones, polysulfones, polyether ketones, polyether ether ketones, polyether ketone ketones, polyethersulfonamides, and mixtures of these wherein the foam has an open-cell structure, the open-cell factor of the foam being at least 75%, preferably at least 85%, particularly preferably at least 90%.

2. The foam according to claim 1, which has a cell size of from 50 to 2000 µm, preferably from 100 to 1000 µm, particularly preferably from 100 to 800 µm, and/or has a density of from 20 to 200 g/l, preferably from 20 to 150 g/l, particularly preferably from 30 to 100 g/l.

3. The foam according to claim 1 or 2, wherein the plastic has a glass transition temperature above 170°C, preferably above 180°C, particularly preferably above 200°C, and/or is thermoplastically extrudable at temperatures above 280°C, preferably above 300°C, particularly preferably above 320°C.

4. A process for producing an open-cell foam according to any of claims 1 to 3, by melting a thermoplastic or a mixture comprising a thermoplastic, giving a melt, mixing the melt with at least one blowing agent under pressure, and foaming the melt comprising the blowing agent by extrusion into the open atmosphere, which comprises
carrying out the foaming at a melt temperature which is higher, by from 2 to 20°C, preferably from 2 to 12°C, particularly preferably from 2 to 10°C, than the temperature at which a closed-cell foam is formed; or which comprises using a foaming plastic which comprises a pulverulent solid which acts as cell-opener, and comprises carrying out the foaming at a melt temperature which is higher, by from 2 to 12°C, preferably from 2 to 10°C, particularly preferably from 2 to 8°C, than the temperature at which a closed-cell foam is formed; or which comprises using a foaming plastic which comprises a foreign polymer which acts as cell-opener, and which permits the production of the open-cell foam at foaming temperatures at which a closed-cell foam would otherwise be produced.

5. The process according to claim 4, wherein use is made of a pulverulent solid selected from the group consisting of graphite, graphite with talc, and graphite with other fillers; and/or the amount used of the pulverulent solid is from 0.1 to 5.0% by weight, preferably from 0.2 to 4.0% by weight, particularly preferably from 0.5 to 4.0% by weight, based in each case on the weight of polymer.

6. The process according to claim 4, wherein the amount used of a foreign polymer is from 0.1 to 20% by weight, preferably from 0.2 to 10% by weight, particularly preferably from 0.2 to 5.0% by weight, based in each case on the total weight of polymer.

7. The process according to any of claims 4 to 6, wherein use is made of a blowing agent selected from the group consisting of inert gases, hydrocarbons, aliphatic alcohols, aliphatic ketones, aliphatic esters, fluorinated hydrocarbons, chemical blowing agents, and mixtures of these, these blowing agents being used in combination with water, where appropriate.

8. The process according to any of claims 4 to 7, wherein the amount used of the blowing agent is from 0.5 to 15% by weight, preferably from 1 to 12% by weight, particularly preferably from 3 to 10% by weight, based in each case on the total weight of polymer.

9. The use of a foam according to any of claims 1 to 3 for sound deadening, and/or for producing materials for sound deadening.

10. A molding, in particular a sheet, comprising an open-cell foam according to any of claims 1 to 3.

11. A process for producing foam sheets for use in sound deadening, which comprises producing sheets composed of a foam by a process according to any of claims 4 to 8, in particular by foaming of the melt via extrusion into the free atmosphere from a slot die and shaping in a calibrator, giving sheets with wide and narrow outer surfaces, and dividing the resultant sheets parallel to their wide surfaces, giving two portions of the sheets, each with a new inner wide surface, and, where appropriate,
adhesive-bonding the two portions obtained by division of the sheets, the surfaces adhesive-bonded to one another here being those which were previously the outer wide surfaces, so that the location of the new inner wide surfaces is on the outside.

## Revendications

1. Mousse d'un matériau synthétique thermoplastique résistant aux hautes températures, choisi dans le groupe constitué par les polyétherimides, les polyéthersulfones, les polysulfones, les polyéthercétones, les polyétheréthercétones, les polyéthercétonecétones, les polyéthersulfonamides et leurs mélanges, **caractérisée en ce que** la mousse présente une structure à pores ouverts, la mousse présentant une porosité ouverte d'au moins 75%, de préférence d'au moins 85%, de manière particulièrement préférée d'au moins 90%.

2. Mousse selon la revendication 1, **caractérisée en ce que** la mousse présente une taille des pores entre 50 et 2000 µm, de préférence entre 100 et 1000 µm, de manière particulièrement préférée entre 100 et 800 µm, et/ou la mousse présente une densité entre 20 et 200 g/l, de préférence entre 20 et 150 g/l, de manière particulièrement préférée entre 30 et 100 g/l.

3. Mousse selon la revendication 1 ou 2, **caractérisée en ce que** le matériau synthétique présente une température de transition vitreuse supérieure à 170°C, de préférence supérieure à 180°C, de manière particulièrement préférée supérieure à 200°C, et/ou est extrudable à l'état thermoplastique à des températures supérieures à 280°C, de préférence supérieures à 300°C, de manière particulièrement préférée supérieures à 320°C.

4. Procédé pour la préparation d'une mousse à pores ouverts selon l'une quelconque des revendications 1 à 3 par fusion d'un matériau synthétique thermoplastique ou d'un mélange contenant un matériau synthétique thermoplastique, avec obtention d'une masse fondue, mélange de la masse fondue avec au moins un agent gonflant sous pression et moussage de la masse fondue contenant l'agent gonflant par expression à l'atmosphère libre, **caractérisé en ce que** le moussage est réalisé à une température de la masse fondue qui est supérieure de 2 à 20°C, de préférence de 2 à 12°C, de manière particulièrement préférée de 2 à 10°C, à la température à laquelle se forme une mousse à pores fermés ; ou
**caractérisé en ce que** le matériau synthétique moussant contient un solide poudreux qui agit comme agent d'ouverture des pores et le moussage est réalisé à une température de la masse fondue qui est supérieure de 2 à 12°C, de préférence de 2 à 10°C, de manière particulièrement préférée de 2 à 8°C, à la température à laquelle se forme une mousse à pores fermés ; ou
**caractérisé en ce que** le matériau synthétique moussant contient un polymère étranger qui agit comme agent d'ouverture de pores et qui permet la préparation de la mousse à pores ouverts à des températures de la mousse auxquelles il se formerait sinon une mousse à pores fermés.

5. Procédé selon la revendication 4, **caractérisé en ce qu'**on utilise un solide poudreux qui est choisi dans le groupe constitué par le graphite, le graphite avec du talc et le graphite avec d'autres charges et/ou on utilise le solide poudreux en une quantité de 0,1 à 5,0% en poids, de préférence de 0,2 à 4,0% en poids, de manière particulièrement préférée de 0,5 à 4,0% en poids, à chaque fois par rapport à la masse du polymère.

6. Procédé selon la revendication 4, **caractérisé en ce qu'**on utilise le polymère étranger en une quantité de 0,1 à 20% en poids, de préférence de 0,2 à 10% en poids, de manière particulièrement préférée de 0,2 à 5,0% en poids, à chaque fois par rapport à la masse totale de polymère.

7. Procédé selon l'une quelconque des revendications 4 à 6, **caractérisé en ce qu'**on utilise un agent gonflant qui est choisi dans le groupe constitué par les gaz inertes, les hydrocarbures, les alcools aliphatiques, les cétones aliphatiques, les esters aliphatiques, les hydrocarbures fluorés, les agents gonflants chimiques et leurs mélanges, ces agents gonflants étant le cas échéant utilisés en combinaison avec de l'eau.

8. Procédé selon l'une quelconque des revendications 4 à 7, **caractérisé en ce qu'**on utilise l'agent gonflant en une quantité de 0,5 à 15% en poids, de préférence de 1 à 12% en poids, de manière particulièrement préférée de 3 à 10% en poids, à chaque fois par rapport à la masse totale de polymère.

9. Utilisation d'une mousse selon l'une quelconque des revendications 1 à 3 pour l'absorption du bruit et/ou pour la production de matériaux destinés à l'absorption du bruit.

10. Corps moulés, en particulier plaques, contenant une mousse à pores ouverts selon l'une quelconque des revendications 1 à 3.

11. Procédé pour la production de plaques en mousse destinées à une utilisation en vue de l'absorption du bruit, **caractérisé en ce que** les plaques sont produites à partir d'une mousse par un procédé selon les revendications 4 à 8, en particulier par moussage de la masse fondue par expression à l'atmosphère libre via une filière à fente et moulage dans un dispositif de calibrage, avec obtention de plaques avec des surfaces extérieures larges et étroites, et
division des plaques obtenues parallèlement à leurs surfaces larges, avec obtention de deux parties des plaques avec à chaque fois une nouvelle surface large interne et le cas échéant
collage des deux parties des plaques obtenues par la division, les surfaces larges qui était auparavant externes étant collées l'une à l'autre de telle manière que les nouvelles surfaces larges internes se trouvent à l'extérieur.
